# EUROPEAN PATENT SPECIFICATION

(11) **EP 1 806 454 B1**
(45) Date of publication and mention of the grant of the patent: **26.08.2015**
(21) Application number: 05790564.8
(22) Date of filing: 05.10.2005
(51) Int. Cl.: D21J 3/10, B22C 1/00

(54) **METHOD AND APPARATUS FOR PRODUCING FIBER MOLDED ARTICLE, FIBER MOLDED PRECURSOR, AND FIBER MOLDED ARTICLE**
VERFAHREN UND VORRICHTUNG ZUR HERSTELLUNG EINES FASERGUSSKÖRPERS, ZWISCHENPRODUKT EINES FASERGUSSKÖRPERS SOWIE FASERGUSSKÖRPER
PROCÉDÉ ET APPAREIL DE PRODUCTION D'ARTICLE CONSTITUÉ DE FIBRE, PRODUIT INTERMÉDIAIRE D' ARTICLE CONSTITUÉ DE FIBRE ET ARTICLE CONSTITUÉ DE FIBRE

(30) Priority: 12.10.2004 JP 2004297604
(43) Date of publication of application: 11.07.2007
(73) Proprietor: Kao Corporation, Chuo-ku Tokyo 103-8210 (JP)
(72) Inventor: TAKAGI, Yoshimasa, c/o Kao Corporation,, Haga-gun, Tochigi 3213497 (JP); TOMIDA, Yoshio, c/o Kao Corporation,, Toyohashi-shi, Aichi 4418074 (JP); OSAKI, Masayuki, c/o Kao Corporation,, Haga-gun, Tochigi 3213497 (JP)
(74) Representative: Vossius & Partner Patentanwälte Rechtsanwälte mbB
(86) International application number: PCT/JP2005/018440
(87) International publication number: WO 2006/040976

(56) References cited:
- EP-A1- 0 466 653
- JP-A- 8 209 600
- JP-A- 2000 239 998
- JP-A- 2004 195 547
- JP-A- 2005 290 600
- JP-U- 6 086 843

## Description

### Technical Field

The present invention relates to a method of producing a fiber molded article, apparatus used therefore including a papermaking mold, a fiber molded article precursor, and a fiber molded article, according to the preamble portions of claims 1, 8, 9 and 10.

### Background Art

Among known methods of making a fiber molded article is a method in which a fiber deposit layer containing a fiber material is prepared by papermaking processing and pressing the fiber deposit layer in a mold. The method generally involves the step of forming a wet fiber deposit layer from slurry containing the fiber material and the step of drying and pressing the fiber deposit layer simultaneously in a drying mold heated to a desired temperature.

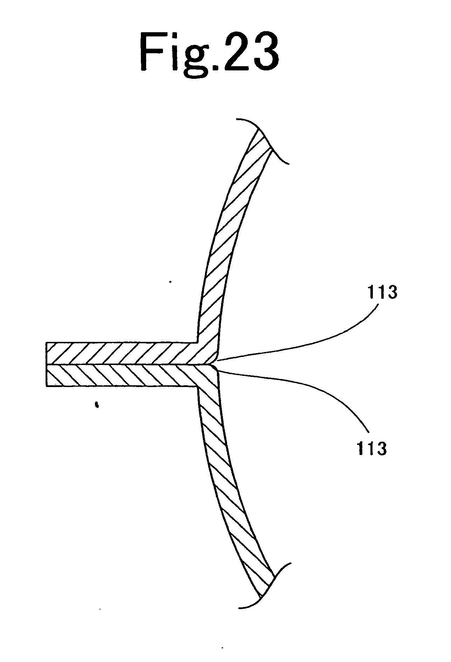

In the manufacture of castings using two or more fiber molded articles joined together to form a cavity in which, e.g., a molten metal is cast, when the fiber molded articles to be joined have a rounded edge 113 (see Fig. 23) on their mating faces, a wedge-shaped gap is formed between the edges. A molten metal enters the gap to become flash that needs deflashing. Too large flash can cause rejection. The molten metal having entered the gap can force open the joined fiber molded articles, which also results in rejection. Hence it is desired for each fiber molded article to be joined to have a sharp edge. To have a sharp edge has the same meaning as to have a minimized curvature radius at the edge. For example, in order to eliminate the necessity to deflash, the curvature radius is preferably 1 mm or smaller, more preferably 0.5 mm or smaller.

JP-A-57-47999 proposes a technique for improving molding properties in the production of fiber molded articles, in which a fiber deposit layer having a three-dimensional shape is formed from slurry containing a fiber material, water is supplied to the surface of the fiber layer, and then the fiber layer is dried and shaped in a drying mold. However, the technique has difficulty in sharpening the edge.

EP 0 466 653 A1 discloses features recited in the preamble of the independent claims.

### Disclosure of the Invention

In the light of the above-described problem, it is an object of the present invention to provide a method of producing a fiber molded article which can provide a fiber molded article with a sharp edge, to provide apparatus used to carry out the method which includes a papermaking mold, and to provide a fiber molded precursor and a fiber molded article.

The present invention accomplishes the above object by providing a method of producing a fiber molded article having a mating face with an edge, the mating face being adapted to be joined with a mating face of another fiber molded article. The method includes the steps of forming a fiber deposit layer containing a fiber material by papermaking processing and pressing the fiber deposit layer. The fiber deposit layer has a thick-walled part at or near the edge, and the thick-walled part is pressed.

The present invention also provides a papermaking mold used in the method of producing a fiber molded article according to claim 7.

The present invention also provides apparatus for producing a fiber molded article according to the features of claim 8.

The present invention also provides a fiber molded precursor used in the production of a fiber molded article according to the features of claim 9.

The present invention also provides a fiber molded article according to the features of claim 10.

### Brief Description of the Drawings

Fig. 1 is a partial cross-section schematically showing a first embodiment of apparatus for carrying out the method of producing a fiber molded article according to the present invention.
Fig. 2 is a perspective schematically illustrating a first embodiment of a papermaking mold according to the present invention, with part cut away.
Fig. 3 is a perspective schematically illustrating a male mold used in drying and shaping means of the apparatus.
Fig. 4 schematically illustrates the step of papermaking in a first embodiment of the method of producing a fiber molded article according to the present invention.
Fig. 5 schematically illustrates the step of transferring a fiber deposit layer after completion of the step of papermaking in the first embodiment of the method of producing a fiber molded article according to the present invention.
Fig. 6 is a cross-section schematically illustrating the step of drying and shaping in the first embodiment of the method of producing a fiber molded article according to the present invention.
Fig. 7 is a cross-section schematically illustrating release from the mold after completion of the step of drying and shaping in the first embodiment of the method of producing a fiber molded article according to the present invention.
Fig. 8 schematically illustrates the step of drying and shaping in the first embodiment of the method of producing a fiber molded article according to the present invention.
Fig. 9 schematically illustrates release from the mold after completion of the step of drying and shaping in the first embodiment of the method of producing a fiber molded article according to the present invention.
Fig. 10 is a perspective of an embodiment of a fiber molded precursor according to the present invention, which is formed by the method of producing a fiber molded article according to the present invention.
Fig. 11(a) is a cross-section of a thick-walled part before the step of drying and shaping, provided to illustrate the change before and after drying and shaping.
Fig. 11 (b) is a cross-section of the thick-walled part after the step of drying and shaping, provided to illustrate the change before and after drying and shaping.
Fig. 12(a) illustrates an embodiment of a fiber molded article according to the present invention which is produced by the method of producing a fiber molded article according to the present invention, wherein two fiber molded articles to be joined face each other.
Fig. 12(b) illustrates an embodiment of a fiber molded article according to the present invention which is produced by the method of producing a fiber molded article according to the present invention, representing an enlarged view of the edges of two molded articles joined together.
Fig. 13 is a partial cross-section schematically showing a second embodiment of apparatus for carrying out the method of producing a fiber molded article according to the present invention.
Fig. 14 is a perspective schematically illustrating a second embodiment of a papermaking mold according to the present invention, with part cut away.
Fig. 15 schematically illustrates the step of papermaking in a second embodiment of the method of producing a fiber molded article according to the present invention.
Fig. 16 schematically illustrates the step of transferring a fiber deposit layer after completion of the step of papermaking in the second embodiment of the method of producing a fiber molded article according to the present invention.
Fig. 17 schematically illustrates the step of drying and shaping in the second embodiment of the method of producing a fiber molded article according to the present invention.
Fig. 18 schematically illustrates release from the mold after completion of the step of drying and shaping in the second embodiment of the method of producing a fiber molded article according to the present invention.
Fig. 19 is a perspective of another embodiment of a fiber molded precursor according to the present invention, which is formed by the method of producing a fiber molded article according to the present invention.
Fig. 20(a) is a cross-section of a thick-walled part before the step of drying and shaping, provided to illustrate the change before and after drying and shaping.
Fig. 20(b) is a cross-section of the thick-walled part after the step of drying and shaping, provided to illustrate the change before and after drying and shaping.
Fig. 21(a) is a cross-section of a thick-walled part before the step of drying and shaping, provided to illustrate the change before and after drying and shaping.
Fig. 21(b) is a cross-section of the thick-walled part after the step of drying and shaping, provided to illustrate the change before and after drying and shaping.
Fig. 22 schematically illustrates a male mold used in the drying and shaping means of the apparatus according to the present invention.
Fig. 23 is a schematic illustration showing the molding problem associated with a fiber molded article produced by conventional techniques.

### Detailed Description of the Invention

The present invention will be described based on its preferred embodiments with reference to the accompanying drawings.

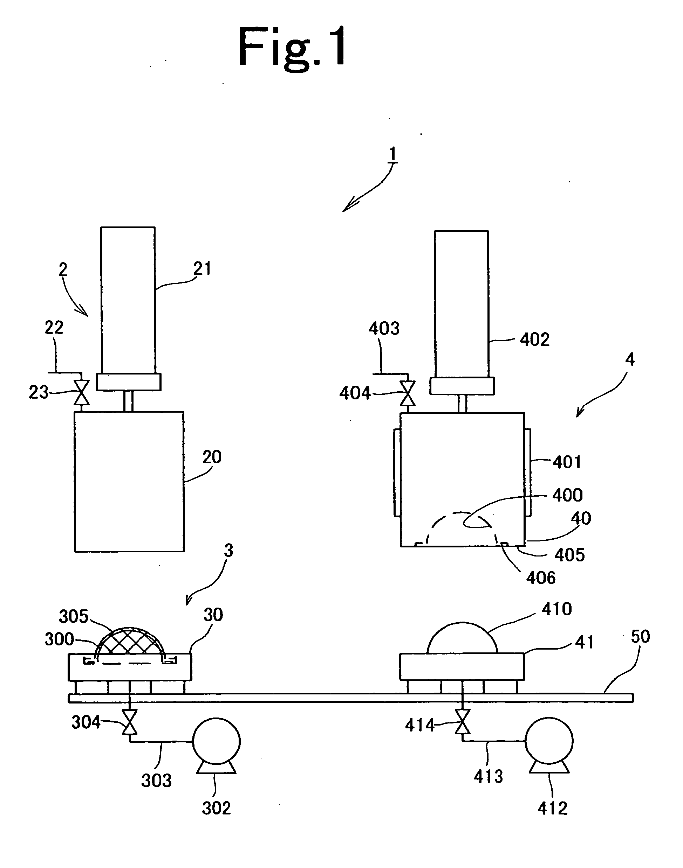

Figs. 1 to 3 provide schematic illustrations of a first embodiment of a production apparatus used to carry out the method of producing a fiber molded article according to the present invention. In these figures numeral 1 indicates the apparatus.

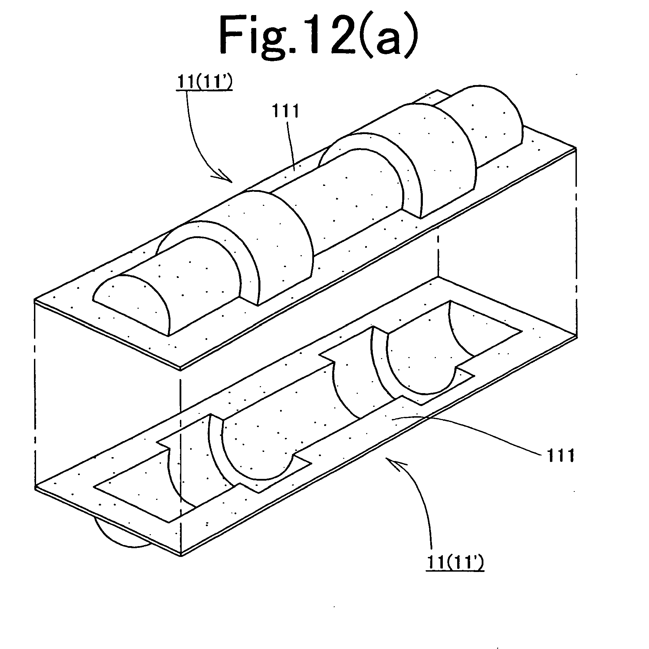

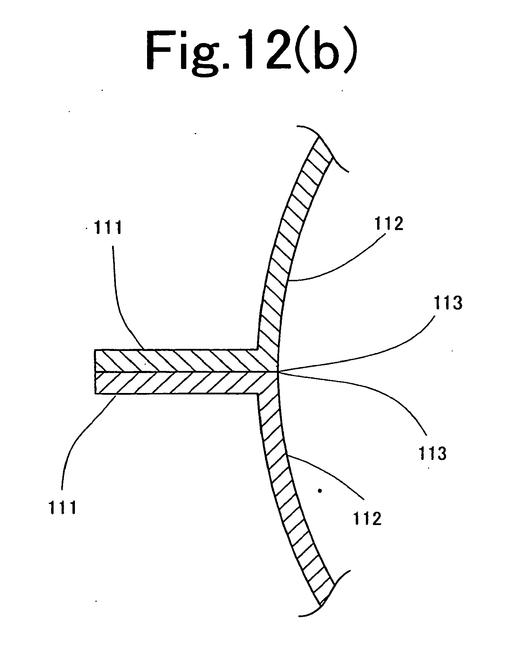

As shown in Fig. 1, the apparatus 1 is for making a casting mold (see Fig. 12) as an embodiment of the fiber molded article according to the present invention. The casting mold is composed of a pair of semicylindrical fiber molded articles 11 each having a flange 111. The apparatus 1 has slurry feed means 2 for feeding a raw material slurry, papermaking means 3 where the slurry from the slurry feed means 2 is formed into a wet fiber deposit layer (a fiber molded precursor), and drying/shaping means 4 where the fiber deposit layer is dried and shaped. The two semicylindrical fiber molded articles 11 are joined together to form a casting mold cavity.

The slurry feed means 2 has a pouring frame 20, a vertically moving mechanism 21 for vertically moving the pouring frame 20, and a slurry feed pipe 22 for feeding the raw material slurry into the pouring frame 20. The slurry feed pipe 22 has a valve 23.

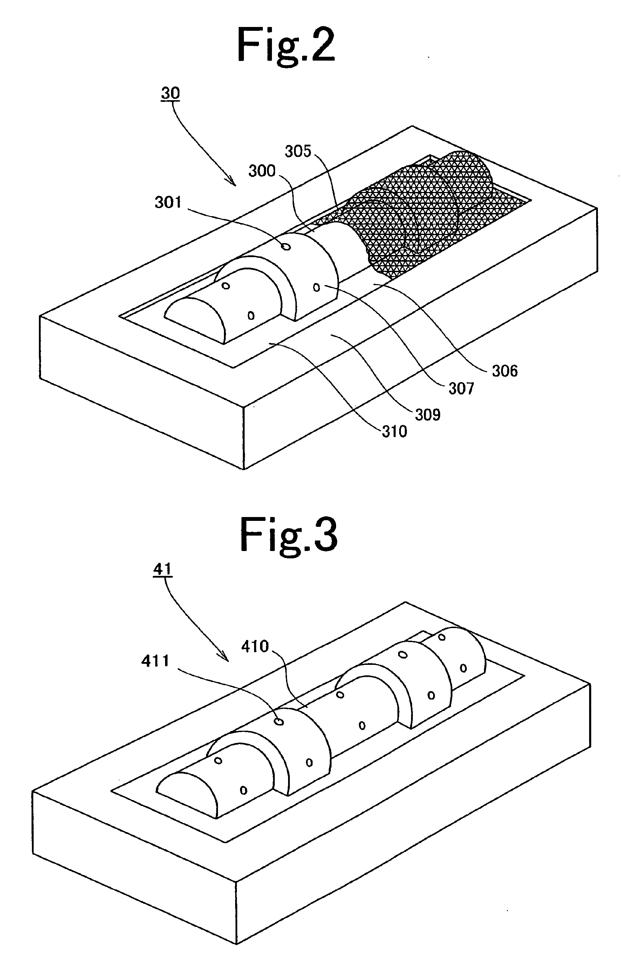

The papermaking means 3 has a papermaking mold 30 serving as a male mold. The papermaking mold 30 has a papermaking portion 300 corresponding to the shape of a fiber deposit layer to be formed. The papermaking portion 300 has gas/liquid passageways 301 (see Fig. 2) open on the surface thereof, piercing the inside thereof, and connected to a drainage pipe 303 leading to a suction pump 302. The drainage pipe 303 has a valve 304. The papermaking portion 300 has a papermaking wire 305 disposed on the surface thereof.

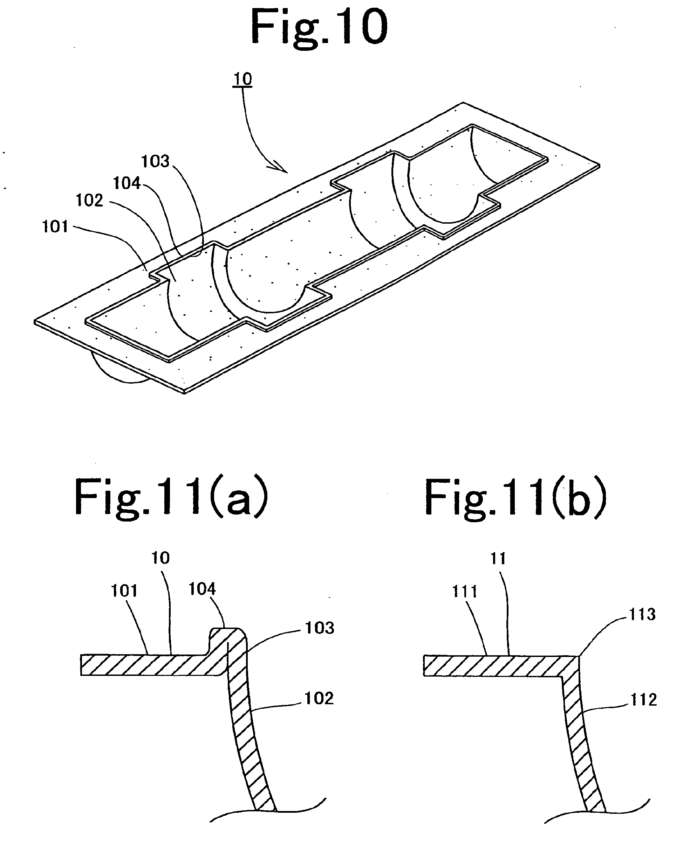

As illustrated in Fig. 2, the papermaking mold 30 has a base part 306 corresponding to the upper surface of a flange 101 (overhang, see Fig. 10) of a fiber deposit layer 10 and a parting face 309. The base part 306 is provided at a position lower than the parting face 309 to form a recess 310. The depth of the recess 310 is designed such that the basal part of the flange 101 is bent to form a thick-walled part 104 (see Fig. 10) when the fiber deposit layer 10 is released from the papermaking mold 30 by combining the papermaking mold 30 with a female mold (receiving mold) 40 hereinafter described. The depth of the recess 310 (i.e., the depth from the parting face 309) is suitably 1 to 20 mm and desirably 3 to 8 mm.

As illustrated in Figs. 1 to 3, the drying/shaping means 4 has a female mold (receiving mold) 40 and a male mold 41. On being butted together, the female mold 40 and the male mold 41 makes a clearance therebetween defining the outer contour of the fiber molded article to be produced. In the first embodiment, the female mold 40 and the male mold 41 are designed to form a clearance that can accommodate the flange 111 of a fiber molded article 11 with substantial flatness.

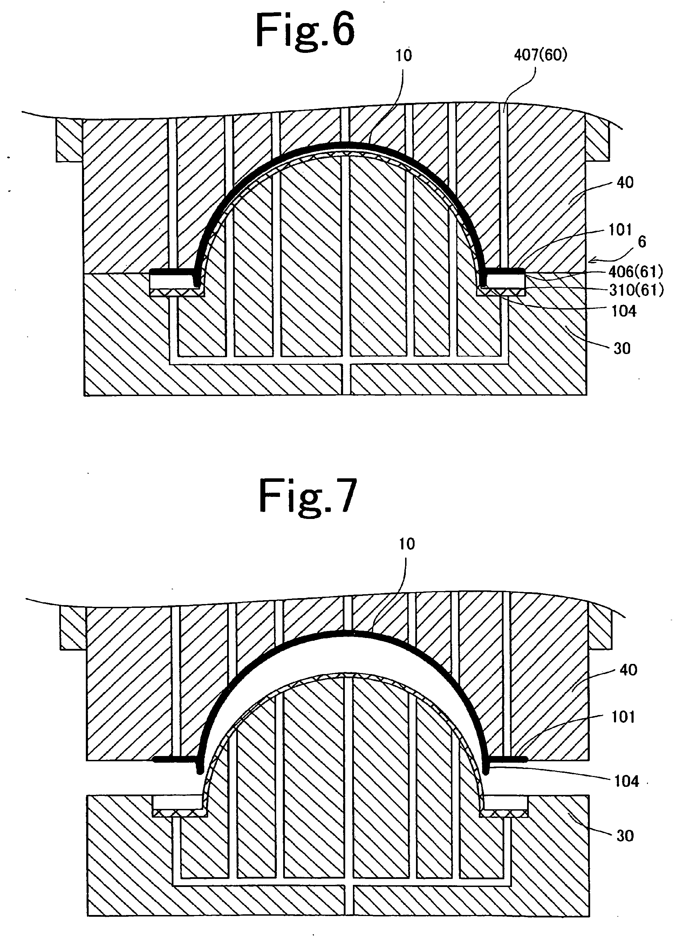

The female mold 40 has a concave forming portion 400 defining the exterior contour of the fiber molded article 11 to be produced. The female mold 40 is equipped with a heater (heating means) 401 for heating the forming portion 400. The female mold 40 is vertically movable by a vertical moving means 402. The male mold 40 has gas/liquid passageways (not shown) open on the forming portion 400 and piercing the inside thereof. The gas/liquid passageways connect to a flow pipe 403 leading to a suction pump and a compressor (both not shown). The flow pipe 403 has a valve 404. The forming portion 400 has a recess 406 which is deeper than the parting face 405 of the female mold 40. The recess 406 is shaped to accommodate the flange 111 of the fiber molded article 11. The recess 406 is to define a part of a space-forming portion described infra. The female mold 40 has gas/liquid passageways 407 (see Fig. 6) open on the bottom of the recess 406 and leading to the flow pipe 403.

The male mold 41 has a convex forming portion 410 shaped to the interior contour of the fiber molded article 11. The forming portion 410 has its surface coated with a fluororesin. The forming portion 410 has gas/liquid passageways 411 (see Fig. 3) open on the surface thereof, piercing the inside thereof, and connecting to a drainage pipe 413 leading to a suction pump 412. The drainage pipe 413 has a valve 414. Cases are sometimes met with in which a resulting fiber molded precursor has depressions at places corresponding to the openings of the gas/liquid passageways 411, which can leave depressions on the surface of castings. Depending on the field of application of the castings, the castings having such depressions require surface finishing with a working machine. In such cases, there is no need to provide the gas/liquid passageways 411. While not shown, a heater (heating means) for heating the forming portion 410 is provided inside the forming portion 410.

As illustrated in Fig. 6, the apparatus 1 has thick-walled part-forming means 6 constructed by the papermaking mold 30 and the female mold 40. The means 6 is designed to bend the basal part of the flange 101 of the fiber deposit layer 10 to make a thick-walled part 104 (see Fig. 10). The thick-walled part forming means 6 includes (1) separation means 60 for separating the outer peripheral portion of the flange 101 of the fiber deposit layer 10 from the papermaking mold 30 when the papermaking mold 30 and the female mold 40 are joined together and (2) a space-forming portion 61 providing a space between the papermaking mold 30 and the female mold 40 in which the basal part of the flange 101 is bent.

In this embodiment, the separation means 60 is composed of the gas/liquid passageways 407 that are open on the bottom of the recess 406, the flow pipe 403 connecting to the passageways 407, and the suction pump. The space-forming portion 61 is defined by the recess 310 of the papermaking mold 30 and the recess 406 of the male mold 40. The gas/liquid passageways 407 may be provided at a higher density than the gas/liquid passageways in the other part so that suction force may be exerted strongly to the outer peripheral portion of the flange of the fiber deposit layer 10.

The apparatus 1 has transfer means (not shown) that moves the papermaking mold 30 and the male mold 41 along a guide 50 to the respective predetermined positions. The apparatus 1 also has control means (not shown) having a sequence controller connected to each of the above-mentioned means whereby to operate the means in accordance with the sequence described hereunder.

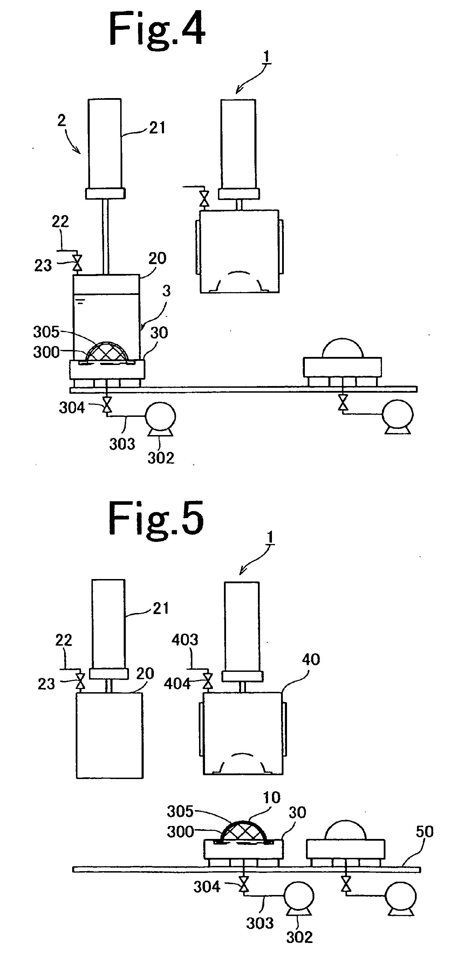

The method of producing a fiber molded article according to the present invention will then be described based on a preferred embodiment in which fiber molded articles for making up a casting mold are produced using the aforementioned apparatus 1. Reference is made to Figs. 4 through 12. In these figures numeral 10 indicates a fiber deposit layer, and numeral 11 indicates a fiber molded article.

In the method of producing a fiber molded article according to the present embodiment, a wet fiber deposit layer 10 (see Fig. 10) is formed from a raw material slurry containing a fiber material, transferred from the papermaking mold 30 to the female mold 40, and pressed between the female mold 40 and the male mold 41 to make the fiber molded article 11 (see Fig. 12).

The method starts with preparation of a raw material slurry for papermaking by dispersing inorganic powder, inorganic fiber, organic fiber, a thermosetting resin, and thcrmoexpandable micro capsules in a dispersing medium. The slurry should be prepared as appropriate for a molded article to be produced. The dispersing medium includes water, white water, a solvent such as ethanol or methanol, and mixtures thereof. Water is preferred in view of stability in fiber layer deposition, dewatering, and shaping, stability of the molded article quality, cost, ease of handling, and the like.

The mixing ratio (by mass) of the above components in the slurry, i.e., inorganic powder/inorganic fiber/organic fiber/thermosetting resin and the thermoexpandable micro capsules is preferably 70% to 80%/2% to 8%/0% to 10%/8% to 16%, more preferably 70% to 80%/2% to 6%/0% to 6%/10% to 14%, each based on the total mass of the inorganic powder, the inorganic fiber, the organic fiber, the thermosetting resin, and the thermoexpandable micro capsules, provided that the total of the in organic powder, the inorganic fiber, the organic fiber, the thermosetting resin, and the thermoexpandable micro capsules is 100% by mass. With the proportion of the inorganic powder being in the above range, satisfactory shape retention during casting and surface properties of molded articles are secured. Mold releasability after molding is also satisfactory. With the proportion of the inorganic fiber being in the above range, satisfactory molding properties and shape retention during casting are secured. With the proportion of the organic fiber being in the above range, satisfactory molding properties are obtained. In order to reduce gas generation and belch of flame from the flow-off due to combustion of organic fiber, the amount of the organic fiber is preferably as small as possible and may be zero as the case may be. With the proportion of the thermosetting resin and the thermoexpandable micro capsules being within the above range, satisfactory molding properties into molded articles, shape retention during casting, and surface smoothness are secured.

The inorganic powder includes graphite (flaky, lumpy, etc.), obsidian, mullite and etc. One or more than one kind of inorganic powder can be selected for use. Graphite, particularly flaky graphite, is preferred in view of molding properties and cost.

The inorganic fiber serves mainly to constitute the skeleton of the molded articles. On casting molten metal, it does not bum even with the heat of the molten metal and continues serving to retain the shape of the article.

The inorganic fiber includes artificial mineral fibers, such as carbon fiber and rock wool, ceramic fibers, and natural mineral fibers. They can be used either alone or in combination of two or more thereof. Carbon fiber that maintains high strength even in high temperatures, such as pitch-based carbon fiber or polyacrylonitrile (PAN)-based carbon fiber, is preferred for reducing thermal shrinkage accompanying carbonization of the thermosetting resin. PAN-based carbon fiber is especially preferred.

The inorganic fiber preferably has an average length of 0.5 to 15 mm, more preferably 3 to 8 mm, from the standpoint of good drainage in papermaking and dewatering the fiber deposit layer and molding properties and uniformity of the fiber molded article.

The organic fiber includes paper fiber (pulp fiber), fibrillated synthetic fibers, regenerated fibers (e.g., rayon fiber), and etc. These fibers are used either individually or as a mixture of two or more thereof. Preferred of them is pulp fiber from the viewpoint of molding properties, strength after drying, and cost.

The pulp fiber includes not only wood pulp but non-wood pulp, such as cotton pulp, linter pulp, bamboo, and straw. These kinds of pulp, whether virgin or recycled, can be used either alone or in combination thereof. From the standpoint of ease and stability of supply, environmental conservation, reduction of production cost, and etc., recycled pulp is preferred.

It is preferred for the organic fiber to have an average length of 0.8 to 2.0 mm, more preferably 0.9 to 1.8 mm, from the viewpoint of molding properties, surface smoothness, and impact strength of the resulting molded articles.

The thermosetting resin is a component necessary to retain the low- and high-temperature strength of the molded article and to provide molded articles with good surface properties which contribute to improve the surface smoothness of castings. The thermosetting resins include phenol resins, epoxy resins, furan resins, and the like. Phenol resins are preferred of them in view of reduced generation of combustible gas, resistance to burning, and a high carbon residue content after thermal decomposition (carbonization) as high as 25% or more to form a carbonized film to provide castings with an improved casting surface. Usable phenol resins include novolak phenol resins requiring a curing agent and resol type phenol resins requiring no curing agent. In using a novolak phenol resin, a curing agent is required. Since the curing agent easily dissolves in water, it is preferably applied to the surface of a molded article after dewatering. The curing agent preferably includes hexamethylenetetramine, and etc. The thermosetting resins can be used either individually or as a combination of two or more thereof.

The slurry preferably contains the thermoexpandable micro capsules in an amount of 0.5% to 10% by mass, more preferably 1% to 5% by mass, based on the total mass of the inorganic powder, the inorganic fiber, the organic fiber, the thermosetting resin, and the thermoexpandable micro capsules. When used in an amount falling within the above range, the thermoexpandable micro capsules exhibit sufficient effects of addition while minimizing adverse influences of expansion on molding precision, and there is no need to make time for cooling for preventing excessive expansion, which contributes to high productivity.

The molded article according to the present embodiment contains the thermoexpandable micro capsules in their expanded state having an average diameter preferably of from 5 to 80 µm, more preferably of from 25 to 50 µm. With the degree of expansion of the thermoexpandable micro capsules being confined within the above range, the effects of addition can be produced to the full while minimizing the adverse influences of expansion on molding precision.

The thermoexpandable micro capsules preferably include microcapsules having a blowing agent that vaporizes and expands encapsulated in a thermoplastic resin capsule wall. The microcapsules preferably have an average particle size of 5 to 60 µm, more preferably 20 to 50 µm, and, on being heated to 80° to 200°C, expand to increase preferably to 3 to 5 times in diameter and 50 to 100 times in volume.

The thermoplastic resin constituting the capsule wall includes polystyrene, polyethylene, polypropylene, polyacrylonitrile, acrylonitrile-vinylidene chloride copolymers, ethylene-vinyl acetate copolymers, and mixtures thereof. The blowing agent to be encapsulated includes low-boiling organic solvents, such as propane, butane, pentane, isobutane, and petroleum ether.

In addition to the aforementioned components, the slurry can contain other components in appropriate ratios. The other components include strengthening agents, such as polyvinyl alcohol, carboxymethyl cellulose (CMC), and polyamideamine-epichlorohydrin resin, flocculants, and colorants.

In the step of forming the fiber deposit layer by papermaking processing, the vertically moving mechanism 21 operates to lower the pouring frame 20, and the valve 23 opens to supply the slurry through the slurry feed pipe 22 into the pouring frame 20 as shown in Fig. 4. When the slurry in the pouring frame 20 reaches a prescribed amount, the valve 23 closes to stop the slurry feed. The valve 304 opens, and the liquid matter of the slurry is sucked by the suction pump 302 through the gas/liquid passageways 301 and the drainage pipe 303. Meanwhile the solid matter of the slurry is deposited on the surface of the wire 305 to build up a wet fiber deposit layer 10. The liquid content of the fiber deposit layer 10 is preferably 50 to 200 parts by mass, more preferably 70 to 100 parts by mass, per 100 parts by mass of the solids content of fiber deposit layer 10 taking into consideration ease of handling the fiber deposit layer 10 and deformability of the fiber deposit layer 10 due to flow of the fibers while pressed between the female mold 40 and the male mold 41 (deformation to some extent by the pressing is desirable). The liquid content of the fiber deposit layer 10 can be adjusted by the suction of the liquid matter with the suction pump 302. When the liquid content decreases to a predetermined level, the suction is stopped.

When the molded article according to the present embodiment is prepared using a slurry containing water, the water content of the molded article before use (i.e., before use as a casting mold) is preferably 8% or less, more preferably 3% or less. A smaller water content causes less gas generation attributed to pyrolysis (carbonization) of the thermosetting resin on casting operation.

After completion of the formation of the fiber deposit layer 10, the vertically moving mechanism 21 lifts the pouring frame 20, and the transfer means operates to transfer the papermaking mold 30 to under the female mold 40 along the guide 50 as shown in Fig. 5.

The female mold 40 is then lowered and joined with the papermaking mold 30 by the vertically moving mechanism 402. Whereupon, as shown in Fig. 6, the recess 310 of the papermaking mold 30 and the recess 406 of the female mold 40 make a space in which the flange 101 of the fiber deposit layer 10 is bent at its basal part.

In order to release the fiber deposit layer 10 from the papermaking mold 30, the fiber deposit layer 10 is sucked toward the forming portion 400 through the flow pipe 403. At the same time, the outer peripheral portion of the flange 101 of the fiber deposit layer 10 is sucked through the gas/liquid passageways 407 open on the bottom of the recess 406 and separated from the papermaking mold 30, whereby the basal part of the flange 101 is bent to form the thick-walled part 104 as shown in Fig. 6.

The female mold 40 is moved up by the vertically moving mechanism 402 whereby the fiber deposit layer 10 is transferred from the papermaking mold to the female mold 40 as illustrated in Fig. 7. The male mold 41 is then moved to the position for drying and shaping with the female mold 40 by the transfer means. As illustrated in Figs. 10 and 11 (a), the fiber deposit layer 10 thus formed has the thick-walled part 104 on the flange 101 along the edge 103 where two faces (the flange 101 and a casting cavity wall 102) meet.

The vertically moving mechanism 402 then operates to lower the female mold 40 to join the female mold 40 with the male mold 41 heated to a prescribed temperature. The fiber deposit layer 10 is pressed between the two molds to give the dry fiber molded article 11. By this pressing, the edge 113 of the fiber molded article 11 where the flange 111 and the cavity wall 112 meet becomes sharp (see Fig. 11 (b)). The female mold 40 and the male mold 41 are designed so that there is formed no space accommodating the thick-walled part 104 when joined together. That is, these molds are designed to define the contour of a fiber molded article as a final product that has no thick-walled part. Being sharp, the edge 113 is liable to be damaged upon contact with other objects. To prevent damage, it is preferred for the edge 113 to have a density of 0.8 g/cm³ or higher.

The mold temperature of the female mold 40 and the male mold 41 is decided as appropriate to the fiber molded article to be produced. To avoid scorching of the fiber deposit layer 10 and the like, the mold temperature is preferably 100° to 250°C, more preferably 120° to 200°C. The pressing pressure by the female mold 40 and the male mold 41 is preferably 0.2 to 10 MPa, more preferably 0.5 to 5 MPa, taking it into consideration that the thick-walled part should be flattened out neatly and the like. Note that the pressing pressure can largely deviate from the above range depending on the material making the fiber molded article, the strength, and the like.

During the drying and shaping, the valve 414 is open, and the water content of the fiber deposit layer 10 is sucked by the suction pump 412 through the gas/liquid passageways 411 (see Fig. 3) and the drainage pipe 413 and discharged outside. On the other hand, the vertically moving mechanism 21 operates to lower the pouring frame 20 to have the papermaking portion 300 of the papermaking mold 30 enclosed in the pouring frame 20, and another fiber deposit layer is formed in the same manner as in the above-described papermaking processing.

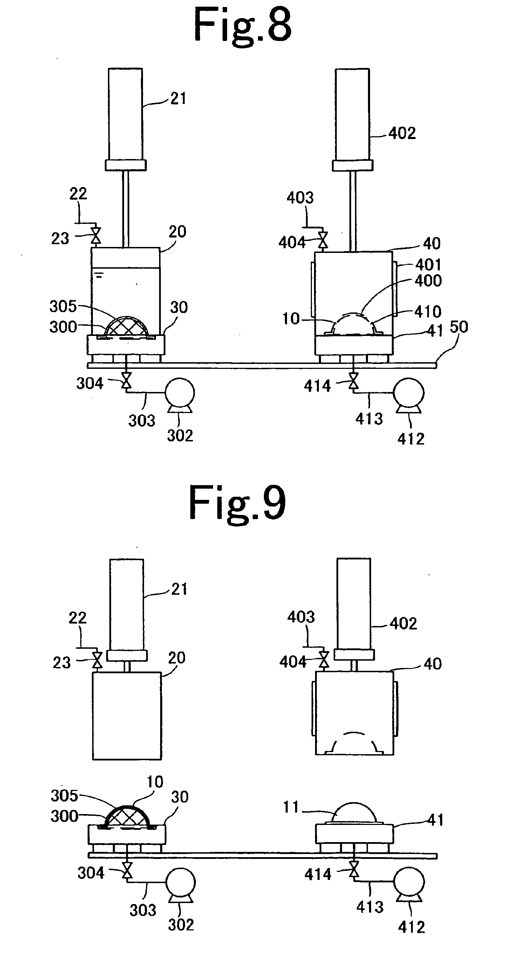

On completion of the drying/shaping step, the suction through the flow pipe 403 is switched to blowing air from the compressor, and the vertically moving mechanism 402 lifts the female mold 40 as illustrated in Fig. 9. The suction by the suction pump 412 is stopped, and the fiber molded article 11 left on the male mold 41 is removed. Production of the fiber molded article 11 thus completes. Meanwhile the pouring frame 20 is moved up by the vertically moving mechanism 21, and the next fiber deposit layer 10 is then transferred to the heating step. In the method of the present embodiment, the above-described steps of forming and drying/shaping are repeatedly carried out.

The molded article produced by the method of the first embodiment may have an appropriate thickness according to the use. A preferred thickness is 0.2 to 5 mm. A more preferred thickness is 0.7 to 1.5 mm. Within the above preferred thickness range, the above-described strength is secured sufficiently while minimizing the influences of the expansion of the thermoexpandable micro capsules on the molding properties, and gas generation on casting is suppressed.

As illustrated above, the method of producing a fiber molded article according to the first embodiment yields molded articles with a sharp edge 103 where two faces meet.

It is possible to provide the fiber molded article with a sprue or a vent as appropriate by making a projection, etc. on a part of the flange 101 overhanging the cavity wall.

Other embodiments of the present invention will then be described.

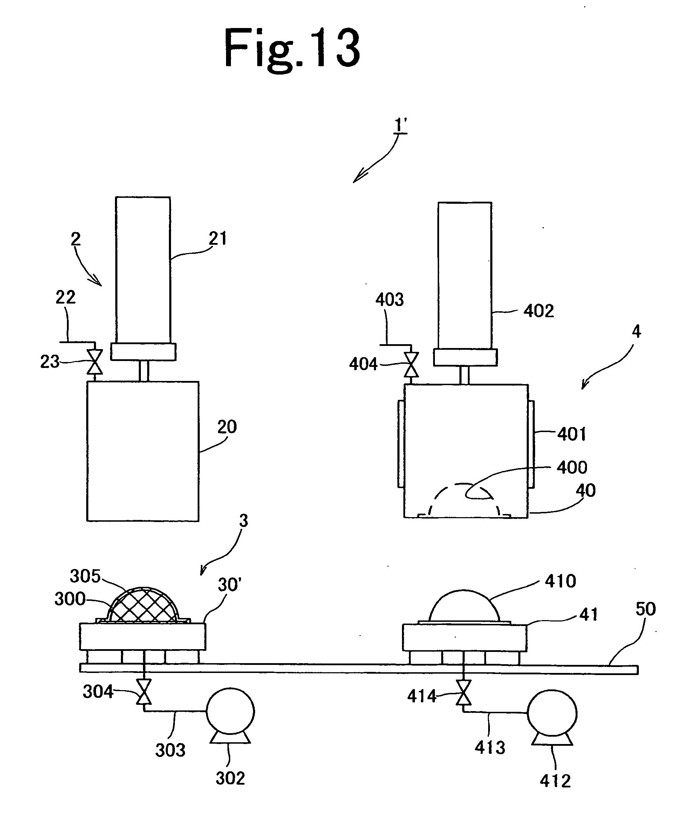

Fig. 13 through 15 schematically illustrate a second embodiment of the apparatus for carrying out the method of producing a fiber molded article according to the present invention. In these figures, numeral I' indicates the apparatus. Members or means common to the apparatus of the first embodiment are given the same numerals and will not be redundantly described.

As shown in Fig. 13, the apparatus 1' is for making a flanged, semicylindrical fiber molded article 11' (see Fig. 12). The apparatus 1' has slurry feed means 2 for feeding a raw material fiber slurry, papermaking means 3 where the fiber slurry from the slurry feed means 2 is formed into a wet fiber deposit layer (a fiber molded precursor), and drying/shaping means 4 where the fiber deposit layer is dried and shaped.

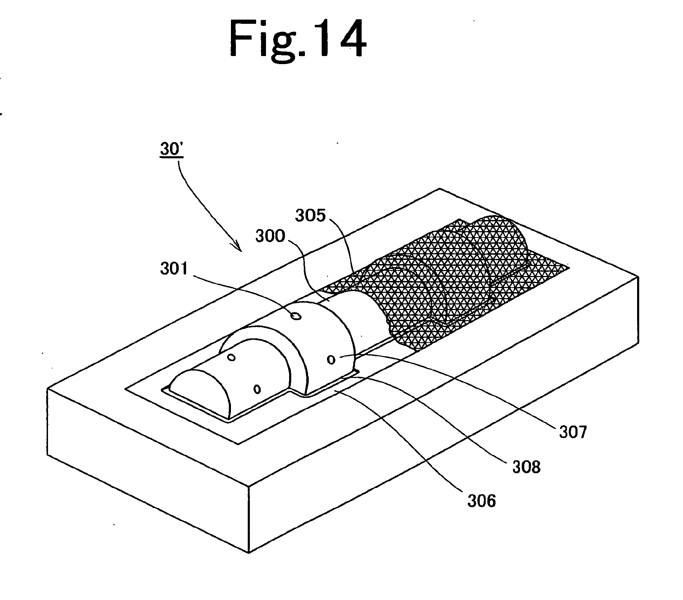

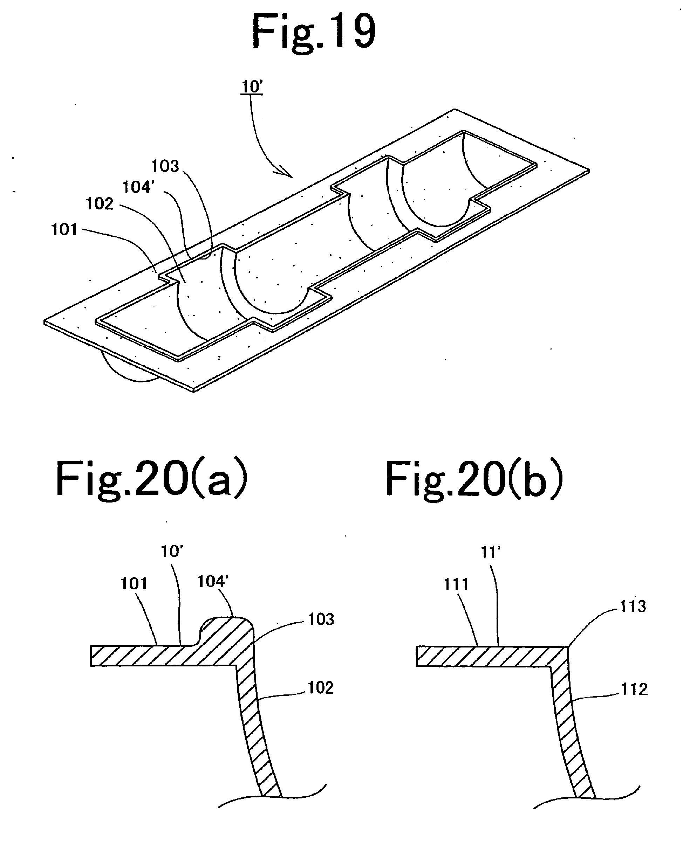

As shown in Fig. 14, the papermaking portion 300 of a papermaking mold 30' of the papermaking means 3 has a base part 306 corresponding to the upper surface of a flange of the fiber deposit layer and a projecting part 307 rising from the base part 306 and corresponding to the cavity wall of the fiber deposit layer. The papermaking portion 300 has a groove 308 along the foot of the projecting part 307. A fiber deposit layer 10' obtained by using the papermaking mold 30'(see Figs. 19 and 20(a)) will have a thick-walled part 104' formed by the groove 308 along the edge 103 where the flange 101 and the cavity wall 102 meet. The width of the groove 308 is preferably 1 to 10 mm, more preferably 3 to 6 mm, so that fibers may be densely deposited in the groove 308. In order to prevent the groove 308 from being largely deformed when the fiber deposit layer is put over a male mold 41, the depth of the groove 308 is suitably 1 to 10 mm and preferably 3 to 5 mm.

The drying/shaping means 4 has a female mold 40 and a male mold 41 as illustrated in Fig. 13. When the female mold 40 and the male mold 41 are butt joined together, there is formed a clearance corresponding to the contour of the fiber molded article to be produced. The female mold 40 has a concave forming portion 400 shaped to the exterior contour of the fiber molded article 11. The female mold 40 has a heater (heating means) for heating the forming part 400. The female mold 40 is moved up and down by a vertically moving mechanism 402. The female mold 40 has gas/liquid passageways (not shown) open on the forming portion 400 and piercing therethrough. The gas/liquid passageways are connected to a flow pipe 403 leading to a suction pump and a compressor (both not shown). The flow pipe 403 has a valve 404. The male mold 41 has a convex forming portion 410 shaped to the interior contour of the fiber molded article 11 to be produced. The forming portion 410 has its surface coated with a fluororesin. The forming portion 410 has gas/liquid passageways (not shown) open on the surface thereof, piercing the inside thereof, and connecting to a drainage pipe 413 leading to a suction pump 412. The drainage pipe 413 has a valve 414. While not shown, a heater (heating means) heating the forming portion 410 is provided inside the forming portion 410.

The apparatus 1' has transfer means (not shown) that moves the papermaking mold 30' and the male mold 41' along a guide 50 to the respective predetermined positions. The apparatus 1' also has control means (not shown) having a sequence controller connected to each of the above-mentioned means whereby to operate the means in accordance with the sequence described hereunder.

The method of producing a fiber molded article according to the present invention will then be described based on a preferred embodiment in which fiber molded articles are produced using the aforementioned apparatus 1'. Reference is made to Figs. 12 and 15 through 20. In these figures numeral 10' indicates a fiber deposit layer, and numeral 11' indicates a fiber molded article.

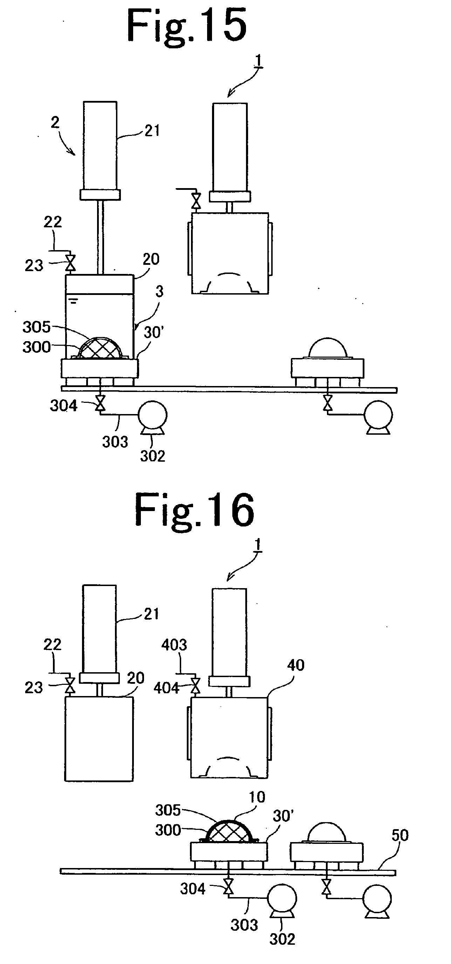

In the step of forming the fiber deposit layer by papermaking processing, the vertically moving mechanism 21 operates to lower the pouring frame 20, and the valve 23 opens to supply the slurry through the slurry feed pipe 22 into the pouring frame 20 as shown in Fig. 15. When the slurry in the pouring frame 20 reaches a prescribed amount, the valve 23 closes to stop the slurry feed. The valve 304 opens, and the liquid matter of the slurry is sucked by the suction pump 302 through the gas/liquid passageways 301 and the drainage pipe 303. Meanwhile the solid matter of the slurry is deposited on the surface of the wire 305 to build up a wet fiber deposit layer 10'. The liquid content of the fiber deposit layer 10' is preferably 50 to 200 parts by mass, more preferably 70 to 100 parts by mass, per 100 parts by mass of the solids content of fiber deposit layer 10' taking into consideration ease of handling the fiber deposit layer 10' and deformability of the fiber deposit layer 10' due to flow of the fibers while pressed between the female mold 40 and the male mold 41 (deformation to some extent by the pressing is desirable). The liquid content of the fiber deposit layer 10' can be adjusted by the suction of the liquid matter with the suction pump 302. When the liquid content decreases to a predetermined level, the suction is stopped.

After completion of the formation of the fiber deposit layer 10', the vertically moving mechanism 21 lifts the pouring frame 20, and the transfer means operates to transfer the papermaking mold 30' to under the female mold 40 along the guide 50 as shown in Fig. 16.

The thus formed fiber deposit layer 10' has the thick-walled part 104' on its flange 101 along the edge 103 where the flange 101 and the cavity wall 102 meet as illustrated in Fig.19 and Fig20(a). Although the thickness and the shape of the thick-walled part 104' are set by the groove 308 of the papermaking mold, the thick-walled part 104' preferably has a width of 3 to 6 mm and a thickness of 3 to 5 mm. The shape of the thick-walled part can be designed freely as long as the volume and the place of formation are in accordance with the above description.

The female mold 40 is then lowered and joined with the papermaking mold 30' by the vertically moving mechanism 402. The fiber deposit layer 10' is sucked toward the forming portion 400 through the flow pipe 403. The vertically moving mechanism 402 operates to lift the female mold 40, whereby the fiber deposit layer 10' is transferred from the papermaking mold 30 to the female mold 40. Thereafter, the male mold 41 is transferred to the position for drying and shaping with the female mold 40.

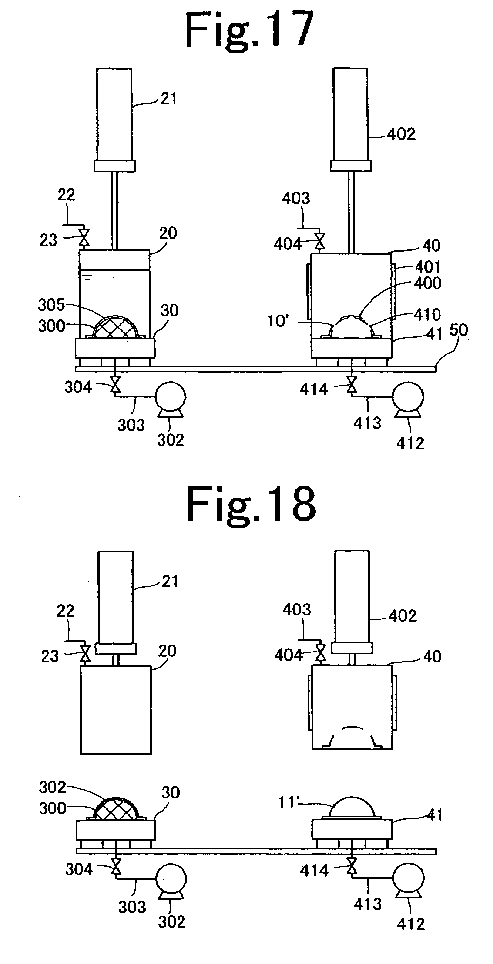

As illustrated in Fig. 17, the vertically moving mechanism 402 then operates to lower the female mold 40 to join the female mold 40 with the male mold 41 heated to a prescribed temperature. The fiber deposit layer 10' is pressed between the two molds to give a dry fiber molded article. By this pressing, there is formed a sharp edge 113 where the flange 111 and the cavity wall 112 of the fiber molded article 11 meet (see Fig. 20(b)). The female mold 40 and the male mold 41 are designed so that there is formed no space accommodating the thick-walled part 104' when joined together. That is, these molds are designed to define the contour of a fiber molded article as a final product that has no thick-walled part. The edge, being sharp, is liable to be damaged upon contact with other objects. To prevent damage, it is preferred for the edge to have a density of 0.8 g/cm³ or higher.

The mold temperature of the female mold 40 and the male mold 41 is decided as appropriate to the fiber molded article to be produced. To avoid scorching of the fiber deposit layer 10' and the like, the mold temperature is preferably 100° to 250°C, more preferably 120° to 200°C. The pressing pressure by the female mold 40 and the male mold 41 is preferably 0.2 to 10 MPa, more preferably 0.5 to 5 MPa, taking it into consideration that the thick-walled part should be flattened out neatly and the like. Note that the pressing pressure can largely deviate from the above range depending on the material making the fiber molded article, the strength, and the like.

During the drying and shaping, the valve 414 is open, and the water content of the fiber deposit layer 10' is sucked by the suction pump 412 through the gas/liquid passageways and the drainage pipe 413 and discharged outside. On the other hand, the vertically moving mechanism 21 operates to lower the pouring frame 20 to have the papermaking portion 300 of the papermaking mold 30' enclosed in the pouring frame 20 again, and another fiber deposit layer is formed in the same manner as in the above-described papermaking processing.

On completion of the drying/shaping step, the suction through the flow pipe 403 is switched to blowing air from the compressor, and the vertically moving mechanism 402 lifts the female mold 40 as illustrated in Fig. 18. The suction by the suction pump 412 is stopped, and the fiber molded article 11' left on the male mold 41 is removed from the male mold 41. Production of the fiber molded article 11' thus completes. Meanwhile the pouring frame 20 is moved up by the vertically moving mechanism 21, and the next fiber deposit layer is then transferred to the heating step. In the method of the present embodiment, the above-described steps of forming and drying/shaping are repeatedly carried out.

As described above, the method of producing a fiber molded article according to the second embodiment yields molded articles with a sharp edge where two faces meet.

When two of the thus produced fiber molded articles 11' are mated with their flanges 111 facing each other as illustrated in Fig. 12(a), substantially no gap is formed along the parting line where the edges of the two molded articles meet as illustrated in Fig. 12(b) because of the sharp-cut edges. Therefore, where the two fiber molded articles are joined to make, for example, a casting mold having a cavity, in which a molten metal is cast, a flashless cast product can be obtained.

The present invention is not limited to the foregoing embodiments, and various changes and modifications can be made therein as follows without departing from the spirit and scope thereof.

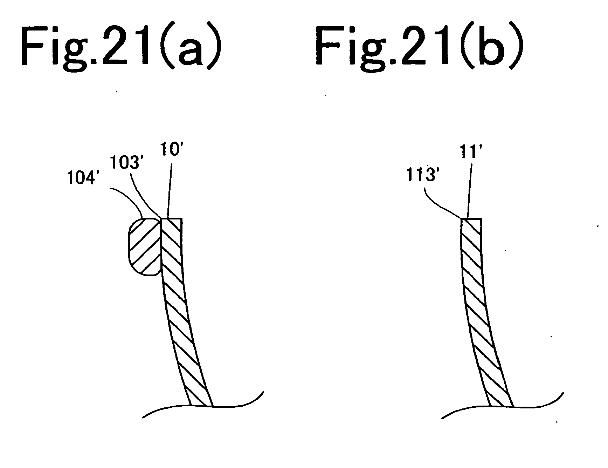

The present invention is especially suited to make a sharp edge where two faces meet because the necessity to separately form a thick-walled part is eliminated merely by previously making a groove on the papermaking mold as illustrated in Fig. 2. In other words, a thick-walled part can be formed by the groove in the papermaking processing. The present invention is also effective in making a fiber molded article with a sharp-cut edge where two faces do not meet. In this application, a fiber deposit layer 10' with an edge 103' (see Fig. 21 (a)) is formed by wet papermaking processing, and a water-containing fiber aggregate 104' is attached by hand near the edge 103' to form a thick-walled part (see Fig. 21(b)). Thereafter, the fiber deposit layer is subjected to pressing in the same manner as described above to obtain a fiber molded article 11' with a sharp edge 113'.

The slurry that can be used includes not only the one used in the foregoing embodiments but one tailored to a fiber molded article to be produced. Known slurry formulations conventionally used in wet papermaking processing are useful as well.

In the foregoing embodiments, the fiber deposit layer (fiber molded precursor) with a thick-walled part obtained by papermaking followed by removal from mold is subjected as such to pressing by the drying/shaping means. Otherwise, it is possible that the fiber deposit layer with the thick-walled part is once dried for storage and afterward subjected to pressing. It is preferred to convert the dried fiber deposit layer into the above-described preferred wet state.

While, in the first embodiment, a female mold (drying mold) of the drying/shaping means is used as a receiving mold, it is possible to use a mold that serves only for transfer. When the fiber deposit layer is transferred to this mold, a thick-walled part may be formed as with the above-described female mold.

While, in the first embodiment, suction through the female mold is effected by a single suction system, it is possible to install a suction line for sucking the outer peripheral portion of the flange of the fiber deposit layer apart from a suction line for sucking the other portion so that the outer peripheral portion of the flange may be sucked more strongly than the other portion.

While, in the first embodiment, the outer peripheral portion of the flange is released from the papermaking mold by suction through gas/liquid passageways, release from the mold may be achieved by means of a mechanism commonly employed in molds for plastic molding, such as a stripper plate or an ejection pin.

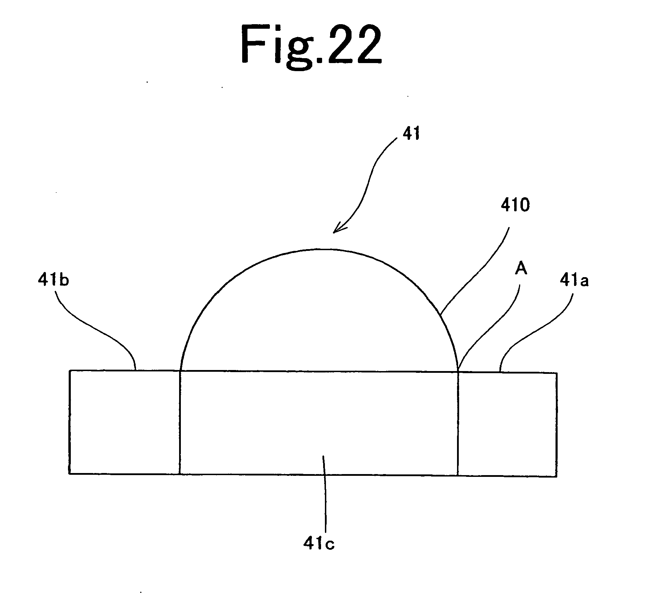

As shown in Fig. 22, the male mold 41 may be a split mold made in pieces (e.g., 41a, 41b, and 41c) joined together. Each piece has its edge sharpened by machining so that the male mold may have a sharp corner A on the forming portion 410 where the convex part begins to rise. By using such a split male mold, it is possible to form a fiber molded article the edge of which has a curvature radius of substantially zero. An integral male mold could have its corner A made sharp by machining without using a split mold to provide a fiber molded article the edge of which has a curvature radius of 0.5 mm or smaller.

The method of producing a fiber molded article of the present invention includes not only a method in which a fiber material-containing fiber deposit layer formed by papermaking is pressed to obtain a fiber molded article having an edge along its face that is adapted to be joined with another fiber molded article but also a method in which a fiber material-containing fiber deposit layer formed by papermaking is pressed to obtain a fiber molded article having an edge along its face that is adapted to be joined with a mating member. The mating member with which the fiber molded article is to be joined includes separately molded articles of thermoplastic resins such as polyethylene.

### EXAMPLES

The present invention will now be illustrated in greater detail with reference to Examples.

### EXAMPLE 1

An organic fiber (recycled newspaper), an inorganic fiber (carbon fiber), an inorganic powder (graphite powder), a thermosetting resin (a phenol resin), and thermoexpandable micro capsules were compounded at a ratio of 4:4:76:12:4 by part by mass and dispersed in water to prepare a slurry having a solids content of about 3% by mass. The slurry was formed into a fiber deposit layer (thickness: 1 to 3 mm) by papermaking processing using a papermaking mold. The shape of the papermaking mold was substantially the same as shown in Fig. 2. That is, the base part of the papermaking mold, which corresponded to the upper surface of the flange of the fiber deposit layer, was provided at a position lower than the parting face to form a recess. A female mold (receiving mold) was joined with the papermaking mold, and the fiber deposit layer was thus removed from the papermaking mold with its flange bent at the basal part thereof. The fiber deposit layer was dried on a drying mold the forming portion of which was coated with a fluororesin (e.g., Teflon®) to obtain a fiber molded article. The pressure during the drying was 3.8 MPa, and the temperature of the drying mold was 200°C.

### COMPARATIVE EXAMPLE 1

The same slurry as used in Example 1 was formed into a fiber deposit layer on a papermaking mold having no recess. The fiber deposit layer was dried in the same manner as in Example to yield a fiber molded article.

### Results:

The curvature radius (R) of the edge of the resulting fiber molded articles was measured. The edge of the fiber molded article of Example was as sharp as having an R of about 0.1 to 0.2 mm. The density at the edge was 0.8 to 1.0 g/cm³. The fiber molded article was combined with another one to make a cavity. The combined two fiber molded articles were buried in molding sand, and a molten metal was poured into the cavity. The combination of the fiber molded articles of Example provided a non-defective cast product with 1 mm or smaller flash along the parting lines. In contrast, the combination of the fiber molded articles of Comparative Example provided a defective cast product with flash of about 2 to 10 mm at several places along the parting lines.

### EXAMPLE 2

Pulp (recycled newspaper), an inorganic fiber (carbon fiber), an inorganic powder (obsidian powder), and an organic binder (a phenol resin) were compounded at a ratio of 24:8:48:16 by part by mass and dispersed in water to prepare a slurry having a solids content of about 3% by mass. The slurry was formed into a fiber deposit layer (thickness: 1 to 3 mm) by papermaking processing using a papermaking mold. The shape of the papermaking mold was substantially the same as shown in Fig. 14. That is, the mold had a 6 mm wide and 3 mm deep groove along near the part corresponding to the edge of the fiber deposit layer. The fiber deposit layer was dried on a drying mold the forming portion of which was coated with a fluororesin (e.g., Teflon®) to give a fiber molded article. The pressure during the drying was 3.8 MPa, and the temperature of the drying mold was 150°C.

### COMPARATIVE EXAMPLE 2

The same slurry as used in Example 2 was formed into a fiber deposit layer on a papermaking mold having no groove. The fiber deposit layer was dried in the same manner as in Example 2 to obtain a fiber molded article.

### Results:

The curvature radius (R) of the edge of the resulting fiber molded articles was measured. The edge of the fiber molded article of Example 2 was as sharp as having an R of about 0.1 to 0.2 mm. The density at the edge was 0.8 to 1.0 g/cm³. The fiber molded article was combined with another one to make a cavity. The combined two fiber molded articles were buried in molding sand, and a molten metal was poured into the cavity. The combination of the fiber molded articles of Example 2 provided a non-defective cast product with 1 mm or smaller flash along the parting lines. In contrast, the combination of the fiber molded articles of Comparative Example 2 provided a defective cast product with flash of about 2 to 10 mm at several places along the parting lines.

### Industrial Applicability

The method of producing a fiber molded article and the fiber molded precursor according to the present invention provide a fiber molded article having a sharp edge along the face mating with another molded article. The method of production of the present invention can be carried out advantageously using the papermaking mode and the apparatus according to the present invention. The fiber molded article according to the present invention has a sharp edge where two faces thereof meet

The method of producing a fiber molded article according to the present invention is particularly suited to produce fiber molded articles used to make up a casting mold. The method is additionally applicable to the production of various fiber molded articles with a sharp edge, including containers, tools, and parts.

## Claims

1. A method of producing a fiber molded article (11, 11') having a mating face with an edge, the mating face being adapted to be joined with a mating face of another fiber molded article or a mating member, the method including the steps of forming a fiber deposit layer (10, 10') containing a fiber material by papermaking processing and pressing the fiber deposit layer (10, 10'), **characterized in that** the fiber deposit layer (10, 10') has a thick-walled part (104, 104') at or near the edge (103) at where a flange (101) of the fiber deposit layer (10, 10') and a casting cavity wall (102) meet, and the thick-walled part (104, 104') is pressed in the step of pressing, the method using a papermaking mold having, in a papermaking portion thereof on which the fiber deposit layer (10, 10') is to be formed, a recess for forming the thick-walled part (104, 104'), the recess being formed by providing a base part of the papermaking portion at a position lower than a parting face of the papermaking mold (30, 30').

2. The method of producing a fiber molded article according to claim 1, wherein the fiber deposit layer (10, 10') is a wet fiber deposit layer obtained by papermaking processing using slurry containing the fiber material, and the edge is formed where two faces meet.

3. The method of producing a fiber molded article according to claim 1 or 2, wherein the step of pressing is carried out using a heated forming mold.

4. The method of producing a fiber molded article according to claim 3, wherein the forming portion of the forming mold is coated with a fluororesin.

5. The method of producing a fiber molded article according to any one of claims 1 to 4, wherein the thick-walled part (104, 104') is formed by partly bending the fiber deposit layer (10, 10').

6. The method of producing a fiber molded article according to claim 5, wherein when the fiber deposit layer (10, 10') is removed from a papermaking mold (30, 30'), the outer peripheral portion of an overhang of the fiber deposit layer providing the mating face is released from the papermaking mold (30, 30') to bend the basal part of the overhang.

7. A papermaking mold used in the method of producing a fiber molded article (11, 11') according to any one of claims 1 to 6, which forms the thick-walled part (104, 104') at where the flange and a casting cavity meet the papermaking mold having, in a papermaking portion thereof on which the fiber deposit layer (10, 10') is to be formed, a recess for forming the thick-walled part (104, 104'), the recess being formed by providing a base part of the papermaking portion at a position lower than a parting face of the papermaking mold (30, 30').

8. Apparatus for carrying out the method of producing a fiber molded article according to claim 6, comprising a papermaking mold (30, 30') for forming the fiber deposit layer (10, 10') the apparatus being **characterized by** further comprising a receiving mold (40) for receiving the fiber deposit layer (10, 10') from the papermaking mold (30, 30'), the papermaking mold (30, 30') or the receiving mold (40) having thick-walled part-forming means (6) for bending the basal part of the overhang to make the thick-walled part (104, 104'), wherein the thick-walled part-forming means (6) comprises (1) separation means (60) for separating the outer peripheral portion of the overhang from the papermaking mold when the papermaking mold and the receiving mold are joined together and (2) a space-forming portion (61) for providing a space between the papermaking mold and the receiving mold in which the basal part is bent, wherein the separation means (60) is connected to the space-forming portion (61).

9. A fiber molded precursor used in the production of a fiber molded article having a mating face with an edge, the mating face being adapted to be joined with a mating fiber molded article or a mating member, comprising a wet fiber deposit layer (10, 10') formed from a slurry containing a fiber material by papermaking processing, and the fiber molded precursor being **characterized by** having a thick-walled part formed by partly bending the fiber deposit layer along or near the edge (103) of the fiber deposit layer (10, 10') corresponding to the edge (113) of the fiber molded article, the fiber molded precursor being used in a papermaking mold having, in a papermaking portion thereof on which the fiber deposit layer (10, 10') is to be formed, a recess for forming a thick-walled part (104, 104') at where a flange (101) of the fiber deposit layer (10, 10') and a casting cavity wall (102) meet, the recess being formed by providing a base part of the papermaking portion at a position lower than a parting face of the papermaking mold (30, 30').

10. A fiber molded article obtained by forming a fiber deposit layer (10, 10') containing a fiber material by papermaking processing and pressing the fiber deposit layer, the fiber molded article (11, 11') being **characterized by** having a sharp edge (113) where two faces thereof meet, the fiber molded article being obtained by using a papermaking mold having, in a papermaking portion thereof on which the fiber deposit layer (10, 10') is to be formed, a recess for forming a thick-walled part (104, 104') at where a flange (101) of the fiber deposit layer (10, 10') and a casting cavity wall (102) meet, the recess being formed by providing a base part of the papermaking portion at a position lower than a parting face of the papermaking mold (30, 30').

11. The fiber molded article according to claim 10, wherein the edge has a curvature radius of 1 mm or smaller.

## Patentansprüche

1. Verfahren zur Herstellung eines Faserformkörpers (11, 11'), der eine Passfläche mit einer Kante hat, wobei die Passfläche geeignet ist, mit einer Passfläche eines anderen Faserformkörpers oder eines Passbauteils zusammengefügt zu werden, und das Verfahren die Schritte des Bildens einer ein Fasermaterial enthaltenden Faserbelagschicht (10, 10') durch Papierherstellungsverarbeitung und Pressen der Faserbelagschicht (10, 10') aufweist, **dadurch gekennzeichnet, dass** die Faserbelagschicht (10, 10') ein dickwandiges Teil (104, 104') an oder nahe der Kante (103) hat, an der ein Flansch (101) der Faserbelagschicht (10, 10') und eine Gusshohlraumwand (102) zusammentreffen, und das dickwandige Teil (104, 104') im Schritt des Pressens gepresst wird, wobei das Verfahren eine Papierherstellungsform verwendet, die in einem Papierherstellungsabschnitt davon, auf dem die Faserbelagschicht (10, 10') zu bilden ist, eine Aussparung zum Bilden des dickwandigen Teils (104, 104') hat und die Aussparung durch Bereitstellen eines Basisteils des Papierherstellungsabschnitts an einer Position gebildet ist, die tiefer als eine Trennfläche der Papierherstellungsform (30, 30') liegt.

2. Verfahren zur Herstellung eines Faserformkörpers nach Anspruch 1, wobei die Faserbelagschicht (10, 10') eine Nassfaserbelagschicht ist, die durch Papierherstellungsverarbeitung mit Hilfe eines das Fasermaterial enthaltenden Breis erhalten wird und die Kante dort gebildet wird, wo zwei Flächen zusammentreffen.

3. Verfahren zur Herstellung eines Faserformkörpers nach Anspruch 1 oder 2, wobei der Schritt des Pressens mit Hilfe einer erwärmten Form zur Formgebung durchgeführt wird.

4. Verfahren zur Herstellung eines Faserformkörpers nach Anspruch 3, wobei der Formgebungsabschnitt der Form zur Formgebung mit einem Fluorharz beschichtet ist.

5. Verfahren zur Herstellung eines Faserformkörpers nach einem der Ansprüche 1 bis 4, wobei das dickwandige Teil (104, 104') durch teilweises Biegen der Faserbelagschicht (10, 10') gebildet wird.

6. Verfahren zur Herstellung eines Faserformkörpers nach Anspruch 5, wobei bei Entfernung der Faserbelagschicht (10, 10') von einer Papierherstellungsform (30, 30') der Außenumfangsabschnitt eines Überstands der Faserbelagschicht, der die Passfläche bildet, von der Papierherstellungsform (30, 30') so gelöst wird, dass das Basisteil des Überstands gebogen wird.

7. Im Verfahren zur Herstellung eines Faserformkörpers (11, 11') nach einem der Ansprüche 1 bis 6 verwendete Papierherstellungsform, die das dickwandige Teil (104, 104') bildet an dem der Flansch und ein Gusshohlraum zusammentreffen, wobei die Papierherstellungsform in einem Papierherstellungsabschnitt davon, auf dem die Faserbelagschicht (10, 10') zu bilden ist, eine Aussparung zum Bilden des dickwandigen Teils (104, 104') hat und die Aussparung durch Bereitstellen eines Basisteils des Papierherstellungsabschnitts an einer Position gebildet ist, die tiefer als eine Trennfläche der Papierherstellungsform (30, 30') liegt.

8. Vorrichtung zum Durchführen des Verfahrens zur Herstellung eines Faserformkörpers nach Anspruch 6, die eine Papierherstellungsform (30, 30') zum Bilden der Faserbelagschicht (10, 10') aufweist, wobei die Vorrichtung **dadurch gekennzeichnet ist, dass** sie ferner eine Aufnahmeform (40) zum Aufnehmen der Faserbelagschicht (10, 10') von der Papierherstellungsform (30, 30') aufweist, wobei die Papierherstellungsform (30, 30') oder die Aufnahmeform (40) eine ein dickwandiges Teil bildende Einrichtung (6) zum Biegen des Basisteils des Überstands hat, um das dickwandige Teil (104, 104') herzustellen, wobei die das dickwandige Teil bildende Einrichtung (6) aufweist: (1) eine Trenneinrichtung (60) zum Trennen des Außenumfangsabschnitts des Überstands von der Papierherstellungsform, wenn die Papierherstellungsform und die Aufnahmeform zusammengefügt sind, und (2) einen raumbildenden Abschnitt (61) zum Bereitstellen eines Raums zwischen der Papierherstellungsform und der Aufnahmeform, in dem das Basisteil gebogen wird, wobei die Trenneinrichtung (60) mit dem raumbildenden Abschnitt (61) verbunden ist.

9. Faserformvorprodukt, das bei der Herstellung eines Faserformkörpers verwendet wird, der eine Passfläche mit einer Kante hat, wobei die Passfläche geeignet ist, mit einem passenden Faserformkörper oder einem Passbauteil zusammengefügt zu werden, das eine Nassfaserbelagschicht (10, 10') aufweist, die aus einem ein Fasermaterial enthaltenden Brei durch Papierherstellungsverarbeitung gebildet ist, und das Faserformvorprodukt **dadurch gekennzeichnet ist, dass** es ein dickwandiges Teil hat, das durch teilweises Biegen der Faserbelagschicht entlang oder nahe der Kante (103) der Faserbelagschicht (10, 10') in Entsprechung zur Kante (113) des Faserformkörpers gebildet ist, wobei das Faserformvorprodukt in einer Papierherstellungsform verwendet wird, die in einem Papierherstellungsabschnitt davon, auf dem die Faserbelagschicht (10, 10') zu bilden ist, eine Aussparung zum Bilden eines dickwandigen Teils (104, 104') hat, an dem ein Flansch (101) der Faserbelagschicht (10, 10') und eine Gusshohlraumwand (102) zusammentreffen, und die Aussparung durch Bereitstellen eines Basisteils des Papierherstellungsabschnitts an einer Position gebildet ist, die tiefer als eine Trennfläche der Papierherstellungsform (30, 30') liegt.

10. Faserformkörper, der durch Bilden einer ein Fasermaterial enthaltenden Faserbelagschicht (10, 10') durch Papierherstellungsverarbeitung und Pressen der Faserbelagschicht erhalten wird, wobei der Faserformkörper (11, 11') **dadurch gekennzeichnet ist, dass** er eine scharfe Kante (113) hat, an der zwei Flächen davon zusammentreffen, wobei der Faserformkörper durch Verwenden einer Papierherstellungsform erhalten wird, die in einem Papierherstellungsabschnitt davon, auf dem die Faserbelagschicht (10, 10') zu bilden ist, eine Aussparung zum Bilden eines dickwandigen Teils (104, 104') hat, an dem ein Flansch (101) der Faserbelagschicht (10, 10') und eine Gusshohlraumwand (102) zusammentreffen, und die Aussparung durch Bereitstellen eines Basisteils des Papierherstellungsabschnitts an einer Position gebildet ist, die tiefer als eine Trennfläche der Papierherstellungsform (30, 30') liegt.

11. Faserformkörper nach Anspruch 10, wobei die Kante einen Krümmungsradius von höchstens 1 mm hat.

## Revendications

1. Procédé pour produire un article moulé constitué de fibres (11, 11') ayant une face de couplage avec un bord, la face de couplage étant adaptée pour être assemblée à une face de couplage d'un autre article moulé constitué de fibres ou un élément de couplage, le procédé comprenant les étapes consistant à former une couche dé dépôt de fibres (10, 10') contenant un matériau fibreux par un processus de fabrication de papier et à comprimer la couche de dépôt de fibres (10, 10'), **caractérisé en ce que** la couche de dépôt de fibres (10, 10') a une partie à paroi épaisse (104, 104') au niveau de ou à proximité du bord (103) à l'endroit où un rebord (101) de la couche de dépôt de fibres (10, 10') et une paroi de cavité de moulage (102) se rencontrent, et la partie à paroi épaisse (104, 104') est comprimée à l'étape de pression, le procédé utilisant un moule de fabrication de papier ayant, dans sa partie de fabrication de papier sur laquelle la couche de dépôt de fibres (10, 10') doit être formée, un évidement pour former la partie à paroi épaisse (104, 104'), l'évidement étant formé en prévoyant une partie de base de la partie de fabrication de papier dans une position plus basse qu'une face de séparation du moule de fabrication de papier (30, 30').

2. Procédé pour produire un article moulé constitué de fibres selon la revendication 1, dans lequel la couche de dépôt de fibres (10, 10') est une couche de dépôt de fibres mouillées obtenue par un processus de fabrication de papier en utilisant la pâte contenant le matériau fibreux et le bord est formé à l'endroit où les deux faces se rencontrent.

3. Procédé pour produire un article moulé constitué de fibres selon la revendication 1 ou 2, dans lequel l'étape de pression est réalisée en utilisant un moule de formage chauffé.

4. Procédé pour produire un article moulé constitué de fibres selon la revendication 3, dans lequel la partie de formage du moule de formage est recouverte avec une résine fluorée.

5. Procédé pour produire un article moulé constitué de fibres selon l'une quelconque des revendications 1 à 4, dans lequel la partie à paroi épaisse (104, 104') est formée en pliant partiellement la couche de dépôt de fibres (10, 10').

6. Procédé pour produire un article moulé constitué de fibres selon la revendication 5, dans lequel lorsque la couche de dépôt de fibres (10, 10') est retirée d'un moule de fabrication de papier (30, 30'), la partie périphérique externe d'une partie saillante de la couche de dépôt de fibres fournissant la face de couplage est démoulée du moule de fabrication de papier (30, 30') pour plier la partie de base de la partie saillante.

7. Moule de fabrication de papier utilisé dans le procédé pour produire un article moulé constitué de fibres (11, 11') selon l'une quelconque des revendications 1 à 6, qui forme la partie à paroi épaisse (104, 104') à l'endroit où le rebord et une cavité de moulage se rencontrent, le moule de fabrication de papier ayant, dans sa partie de fabrication de papier sur laquelle la couche de dépôt de fibres (10, 10') doit être formée, un évidement pour former la partie à paroi épaisse (104, 104'), l'évidement étant formé en prévoyant une partie de base de la partie de fabrication de papier dans une position plus basse qu'une face de séparation du moule de fabrication de papier (30, 30').

8. Appareil pour réaliser le procédé pour produire un article moulé constitué de fibres selon la revendication 6, comprenant un moule de fabrication de papier (30, 30') pour former la couche de dépôt de fibres (10, 10'), l'appareil étant **caractérisé en ce qu'**il comprend en outre un moule de réception (40) pour recevoir la couche de dépôt de fibres (10, 10') du moule de fabrication de papier (30, 30'), le moule de fabrication de papier (30, 30') ou le moule de réception (40) ayant des moyens de formation de partie à paroi épaisse (6) pour plier la partie de base de la partie saillie afin de réaliser la partie à paroi épaisse (104, 104'), dans lequel les moyens de formation de partie à paroi épaisse (6) comprennent (1) des moyens de séparation (60) pour séparer la partie périphérique externe de la partie saillie du moule de fabrication de papier lorsque le moule de fabrication de papier et le moule de réception sont assemblés et (2) une partie de formation d'espace (61) pour fournir un espace entre le moule de fabrication de papier et le moule de réception dans lequel la partie de base est pliée, dans lequel les moyens de séparation (60) sont raccordés à la partie de formation d'espace (61).

9. Précurseur moulé constitué de fibres utilisé pour la production d'un article moulé constitué de fibres ayant une face de couplage avec un bord, la face de couplage étant adaptée pour être assemblée à un article moulé constitué de fibres de couplage ou un élément de couplage, comprenant une couche de dépôt de fibres mouillées (10, 10') formée à partir d'une pâte contenant un matériau fibreux par un processus de fabrication de papier, et le précurseur moulé constitué de fibres étant **caractérisé en ce qu'**il a une partie à paroi épaisse formée en pliant partiellement la couche de dépôt constituée de fibres le long ou à proximité du bord (103) de la couche de dépôt de fibres (10, 10') correspondant au bord (113) de l'article moulé constitué de fibres, le précurseur moulé constitué de fibres étant utilisé dans un moule de fabrication de papier ayant, dans sa partie de fabrication de papier, sur laquelle la couche de dépôt d fibres (10, 10') doit être formée, un évidement pour former une partie à paroi épaisse (104, 104') à l'endroit où un rebord (101) de la couche de dépôt de fibres (10, 10') et une paroi de cavité de moulage (102) se rencontrent, l'évidement étant formé en prévoyant une partie de base de la partie de fabrication de papier dans une position plus basse qu'une face de séparation du moule de fabrication de papier (30, 30').

10. Article moulé constitué de fibres obtenu en formant une couche de dépôt de fibres (10, 10') contenant un matériau fibreux par un processus de fabrication de papier et en comprimant la couche de dépôt de fibres, l'article moulé constitué de fibres (11, 11') étant **caractérisé en ce qu'**il a un bord saillant (113) où ses deux faces se rencontrent, l'article moulé constitué de fibres étant obtenu en utilisant un moule de fabrication de papier ayant, dans sa partie de fabrication de papier sur laquelle la couche de dépôt de fibres (10, 10') doit être formée, un évidement pour former une partie à paroi épaisse (104, 104') à l'endroit où un rebord (101) de la couche de dépôt de fibres (10, 10') et une paroi de cavité de moulage (102) se rencontrent, l'évidement étant formé en prévoyant une partie de base de la partie de fabrication de papier dans une position plus basse qu'une face de séparation du moule de fabrication de papier (30, 30').

11. Article moulé constitué de fibres selon la revendication 10, dans lequel le bord a un rayon de courbure de 1 mm ou inférieur.
